# EUROPEAN PATENT APPLICATION

(11) **EP 2 506 214 A1**
(43) Date of publication of application: **03.10.2012**
(21) Application number: 12157269.7
(22) Date of filing: 28.02.2012
(51) Int. Cl.: G06T 7/00, G06F 3/048, G06F 3/12

(54) **Proofreading apparatus, proofreading method, and recording medium**

(30) Priority: 31.03.2011 JP 2011081160
(71) Applicant: Fujifilm Corporation, Minato-ku Tokyo 106-8620 (JP)
(72) Inventor: Watanabe, Akira, Tokyo, 107-0052 (JP)
(74) Representative: HOFFMANN EITLE

(57) **Abstract**

An area of interest. (112) is designated from a page region (Rp) having a size in common with at least two pages (Dp). An image of interest (146, 152, 168), which corresponds to the designated area of interest (112), is extracted from each of the at least two pages (Dp). A list image (142L, 142R, 162) is generated in which extracted images of interest (146) are arrayed along a predetermined direction.

## Description

### BACKGROUND OF THE INVENTION

### Field of the Invention:

The present invention relates to a proofreading apparatus, a proofreading method, and a recording medium with a program stored therein for electrically proofreading proof data representing a plurality of pages. Description of the Related Art:
In recent years, CTP (Computer to Plate) technology for directly producing printing plates from electronic data without the need for any intermediate mediums or processes has been in widespread use in the printing and platemaking field. There have been proposed various proofreading assistance tools for performing efficient proofreading processes using electronic data for CTP. For example, according to one proofreading assistance tool, proof data for use in a first proofreading process and proof data for use in a re-proofreading process are compared with each other to automatically inspect correction errors, correction oversights, and unnecessary corrections due to mistakes committed by the operator.

Japanese Laid-Open Patent Publication No. 2010-033350 discloses an apparatus for alternately displaying a first image and a second image on a display screen. The disclosed apparatus makes it possible to perform a plate checking process on a display, instead of a conventional process for visually checking a proof against an original manuscript.

Japanese Laid-Open Patent Publication No. 2000-029196 discloses an apparatus for visually presenting areas where a first proof and a revised proof agree with each other as a low-density image, presenting areas where the first proof and the revised proof differ from each other as an image of the first proof or the revised proof itself, and outputting a combined image that represents a combination of the presented images.

### SUMMARY OF THE INVENTION

The proofreading process includes a sequence for confirming whether or not titles including a book title, captions, and chapters are properly placed in given positions (so-called headlines) on pages, or whether the titles have respective contents in agreement with each other.

The apparatus disclosed in Japanese Laid-Open Patent Publication No. 2010-033350 and Japanese Laid-Open Patent Publication No. 2000-029196 are merely capable of comparing two images with each other page-by-page. If the proof data represent a large number of pages, then the proofreading process for comparing images page-by-page will consume several man-hours, resulting in low working efficiency.

It is an object of the present invention to provide a proofreading apparatus, a proofreading method, and a recording medium with a program stored therein for performing a proofreading process more efficiently than the conventional proofreading process for comparing images page-by-page.

According to the present invention, there is provided a proofreading apparatus for electronically proofreading proof data made up of a plurality of pages, comprising a region-of-interest designator for designating an area of interest from a page region having a size in common with at least two pages, an image-of-interest extractor for extracting an image of interest that corresponds to the area of interest designated by the region-of-interest designator from each of the at least two pages, and a list image generator for generating a list image in which images of interest extracted by the image-of-interest extractor are arrayed along a predetermined direction.

Since the proofreading apparatus includes the image-of-interest extractor for extracting an image of interest that corresponds to a designated area of interest, and the list image generator, which generates a list image in which images of interest extracted by the image-of-interest extractor are arrayed along a predetermined direction, an operator of the proofreading apparatus can confirm whether or not the images of interest are in agreement with each other as a whole on the list image. Since the images of interest can be confirmed as a whole throughout the designated pages, efficiency is much better than if two images were simply compared with each other page-by-page.

Preferably, the proofreading apparatus further comprises a page designator for designating a plurality of pages from which the image of interest is extracted by the image-of-interest extractor.

Preferably, the proofreading apparatus further comprises a plate check processor for determining image agreement between the images of interest.

Preferably, the list image generator generates a list image with a highlighted region, which is judged as not being in agreement with other images by the plate check processor.

Preferably, the list image generator generates a list image with classified types of images of interest, which are judged as being in agreement with each of other images by the plate check processor.

Preferably, the region-of-interest designator designates a rectangular area of interest, and the list image generator generates a list image in which images of interest are arrayed along a direction aligned with a shorter side of the rectangular area of interest.

Preferably, the proofreading apparatus further comprises a display unit for displaying the list image that is generated by the list image generator.

According to the present invention, there is also provided a proofreading method of electronically proofreading proof data made up of a plurality of pages, comprising the steps of designating an area of interest from a page region having a size in common with at least two pages, extracting an image of interest that corresponds to the designated area of interest from each of the at least two pages, and generating a list image in which extracted images of interest are arrayed along a predetermined direction.

According to the present invention, there is further provided a recording medium storing therein a program for electronically proofreading proof data made up of a plurality of pages, the program enabling a computer to function as a region-of-interest designator for designating an area of interest from a page region having a size in common with at least two pages, an image-of-interest extractor for extracting an image of interest that corresponds to the area of interest designated by the region-of-interest designator from each of the at least two pages, and a list image generator for generating a list image in which images of interest extracted by the image-of-interest extractor are arrayed along a predetermined direction.

With the proofreading apparatus, the proofreading method, and the recording medium according to the present invention, since an image of interest corresponding to a designated area of interest is extracted from each of at least two pages, and a list image in which extracted images of interest are arrayed along a predetermined direction is generated, the operator of the proofreading apparatus can confirm whether or not the images of interest are in agreement with each other as a whole on the list image. Since the images of interest can be confirmed as a whole throughout the designated pages, efficiency is much better than if two images were simply compared with each other page-by-page.

The above and other objects, features, and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a schematic view of a print producing system incorporating therein an image editing apparatus as a proofreading apparatus according to an embodiment of the present invention;
FIG. 2 is an electric block diagram of the image editing apparatus shown in FIG. 1;
FIG. 3 is a flowchart of a printing sequence carried out by the print producing system shown in FIG. 1;
FIG. 4 is a view showing proof data made up of a plurality of page data;
FIG. 5 is a flowchart of an operation sequence of the image editing apparatus for a consolidated display process, which is performed in step S4 shown in FIG. 3;
FIG. 6 is a view showing a first image representing a setting example of the consolidated display process;
FIG. 7 is a view showing a second image representing a setting example of the consolidated display process;
FIG. 8 is a view showing an example of an image that is displayed in the consolidated display process;
FIG. 9 is a view showing a change in a window that is displayed in the image shown in FIG. 8; and
FIG. 10 is a view showing another example of an image that is displayed in the consolidated display process.

### DESCRIPTION OF THE PREFERRED EMBODIMENTS

A proofreading method according to a preferred embodiment of the present invention, in relation to a proofreading apparatus and a print producing system for carrying out the proofreading method, will be described in detail below with reference to the accompanying drawings.

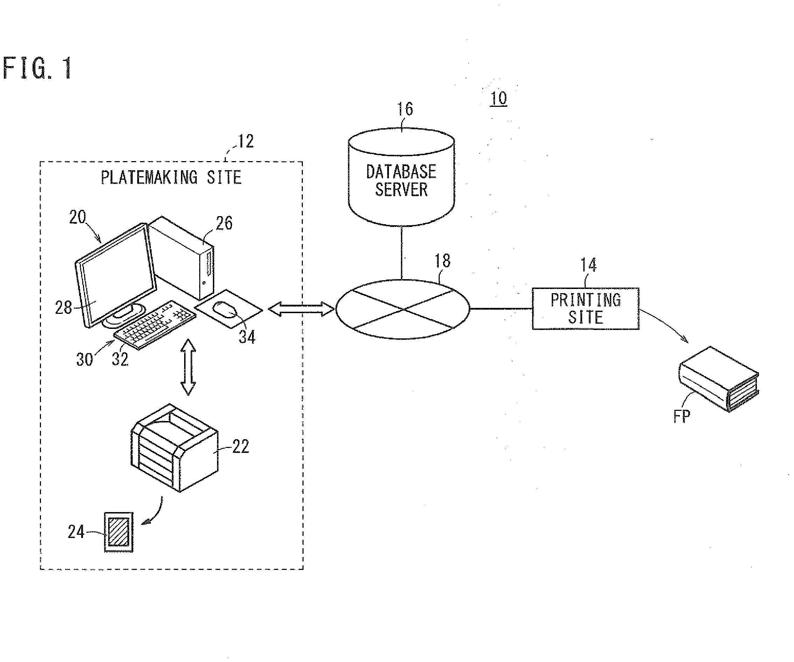

FIG. 1 is a schematic view of a print producing system 10 incorporating therein an image editing apparatus 20 as a proofreading apparatus according to an embodiment of the present invention.

As shown in FIG. 1, the print producing system 10 basically comprises a platemaking site 12, a printing site 14, a database server 16, and a network 18. The platemaking site 12 includes an image editing apparatus 20 and a proof press 22.

The image editing apparatus 20 generates platemaking data in a page description language (hereinafter referred to as "PDL"), e.g., PDL-format data in color channels of four colors (CMYK) or three colors (RGB).

PDL refers to a language, which is descriptive of image information including document information, position information, color information (including density information), etc., of characters, figures, etc., in a "page" that serves as an output unit for printing, displaying, or the like. Known types of PDL include PDF (Portable Document Format according to IS032000-1:2008), PostScript (registered trademark) of Adobe Systems, and XPS (XML Paper Specification).

The image editing apparatus 20 has various functions including an image processing function to perform a preflight process, a color conversion process, a layout process, etc., on PDL-format data, a conversion function to convert PDL-format data into raster-format data, e.g., bitmap or TIFF data, and a data transmission function to transmit print data to the proof press 22.

The image editing apparatus 20 includes a main unit 26, a display unit 28, and an input unit 30 including a keyboard 32 and a mouse 34. The mouse 34, which serves as a pointing device, may be replaced with a track pad or a track ball.

The proof press 22 is an output device for producing a proof print 24 for proofreading. The proof press 22 may comprise a DDCP (Direct Digital Color Proofer), which is equivalent in performance to an offset press, an ink jet color proofer, a low-resolution color laser printer (electrophotographic printer), an ink jet printer, or the like.

The database server 16 saves, updates, and deletes various data files required to produce prints. The data files include material data (content data) from production companies, not shown, proof data, platemaking data, job tickets (e.g., JDF (Job Definition Format) files), ICC (International Color Consortium) profiles, color sample data, etc.

The network 18 is constructed according to communication standards such as Ethernet (registered trademark) or the like. The platemaking site 12, the printing site 14, and the database server 16 are connected together through the network 18. If the platemaking site 12 and the printing site 14 are geographically spaced apart from each other, platemaking data may be exchanged between the platemaking site 12 and the printing site 14 through the network 18.

The printing site 14 includes an image processing device for performing a desired image processing procedure on acquired platemaking data, a platesetter for creating printing plates, an offset press or a digital press for printing desired images on various mediums, and various other devices for performing bookbinding and post-processing procedures on the prints. The printing site 14 produces a processed print FP, i.e., a casebound book as shown in FIG. 1, according to one or more printing processes.

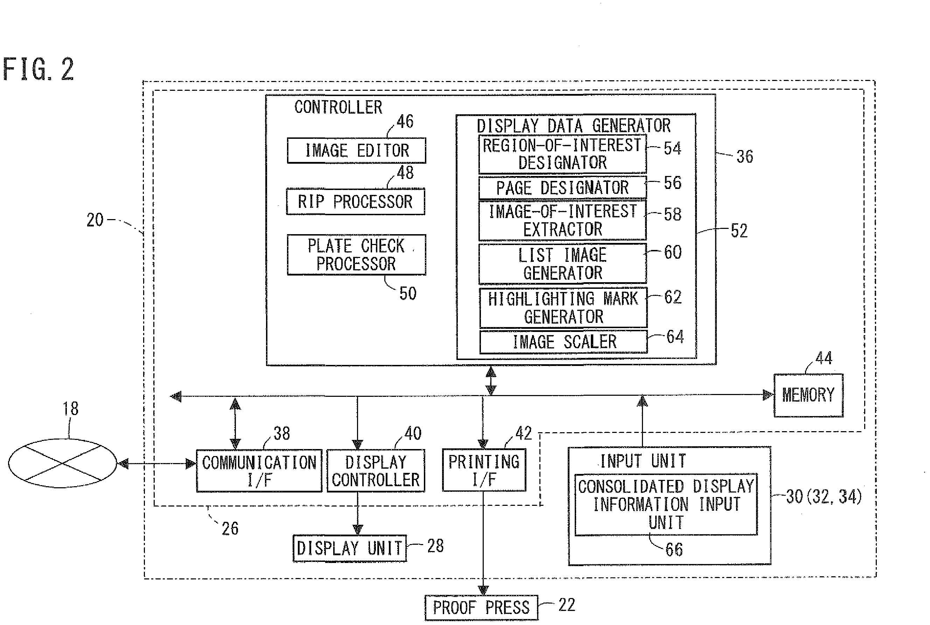

FIG. 2 is an electric block diagram of the image editing apparatus 20 shown in FIG. 1.

As shown in FIG. 2, the main unit 26 includes a controller 36, a communication I/F 38, a display controller 40, a printing I/F 42, and a memory 44.

The communication I/F 38 comprises an interface for sending electric signals to and receiving electric signals from an external apparatus. For example, the communication I/F 38 can acquire material data provided by a production company (not shown). The communication I/F 38 can also acquire various items of information, such as platemaking data, ICC profiles, etc., which are managed and saved by the database server 16.

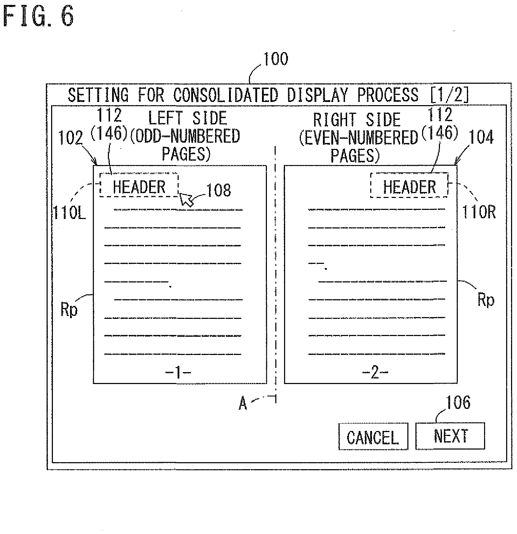

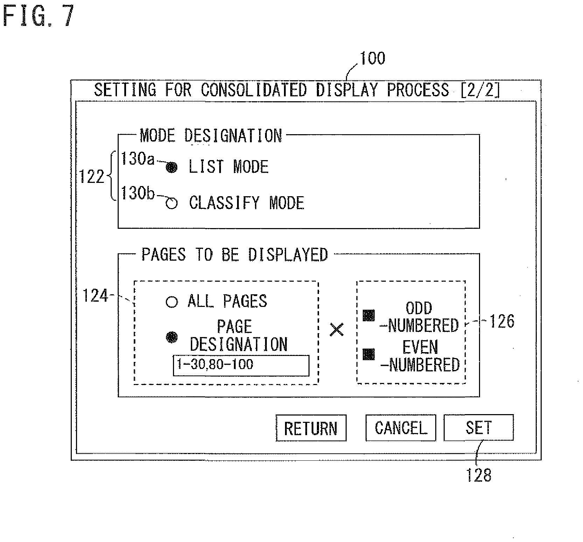

The display controller 40 comprises a control circuit for controlling the display unit 28 under the control of the controller 36. More specifically, upon the display controller 40 outputting a display control signal to the display unit 28 via an 1/F (not shown), the display unit 28 is energized to display various images including the windows 100 shown in FIGS. 6 and 7.

The printing I/F 42 is an interface for sending electric signals representing printing data to the proof press 22, to thereby enable the proof press 22 to print the proof print 24.

The memory 44 stores programs and data, which are required for the controller 36 to control various parts of the main unit 26. The memory 44 may comprise a recording medium such as a nonvolatile memory, a hard disk, or the like.

The controller 36 comprises a processor such as a CPU. The controller 36 reads and executes programs stored in the memory 44 in order to perform the functions of an image editor 46, an RIP processor 48, a plate check processor 50, and a display data generator 52.

The image editor 46 generates edited data for each page from material data representing characters, figures, patterns, pictures, etc. The image editor 46 also performs an imposing process in accordance with a binding process and a page folding process, which have been designated, by referring to tag information of a job ticket.

The RIP processor 48 performs a rasterizing process on proof data (including proofread data). The rasterizing process includes a data format conversion process for converting data from a PDL format into a raster format, and a color matching process using an ICC profile.

The display data generator 52 includes a region-of-interest designator 54 for designating an area of interest 112 (see FIG. 6) from a given page region (a common page region Rp to be described later), a page designator 56 for designating a plurality of pages to be presented in a consolidated display process, an image-of-interest extractor 58 for extracting an image of interest 146 for each page, which corresponds to the area of interest 112 designated by the region-of-interest designator 54, a list image generator 60 for generating a list image 142R made up of images of interest 146, which are extracted by the image-of-interest extractor 58, and which are arrayed along a predetermined direction, a highlighting mark generator 62 for generating a mark 154 or the like, which highlights an area judged by the plate check processor 50 as being in disagreement, and an image scaler 64 for scaling each image of interest 146 according to a designated display magnification.

The term "consolidated display process" as used herein refers to a process of extracting common images of interest 146 and simultaneously displaying a list of the extracted images of interest 146 with respect to proof data, which are made up of a plurality of page data Dp having common page regions. The consolidated display process is particularly effective in confirming whether or not titles including a book title, captions, and chapters are properly placed on pages in given positions (so-called headlines), or whether such titles have content in agreement with each other.

The input unit 30 functions as a consolidated display information input unit 66 for inputting to the main unit 26 various items of information relative to the consolidated display process.

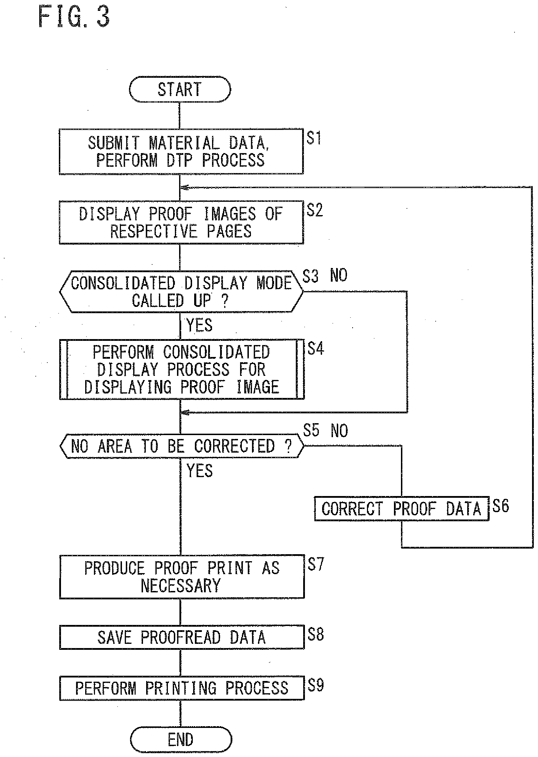

The image editing apparatus 20 according to the present embodiment is configured as described above. A printing sequence carried out by the print producing system 10 will be described below with reference to FIG. 3. The printing sequence includes a platemaking process, which is performed in the platemaking site 12 (see FIG. 1). The platemaking process includes steps S1 through S8. In the present embodiment, a proofreading process contained within the platemaking process will mainly be described below.

First, a designer belonging to a production company or the like submits material data for a processed print FP, and in step S1, an operator belonging to the platemaking site 12 edits the material data in a DTP process. For example, the image editing apparatus 20 acquires material data, which have been saved in the database server 16 via the network 18 and the communication I/F 38, and then the image editing apparatus 20 stores the acquired material data in the memory 44.

Depending on an editing process carried out by the operator, the image editor 46 generates edited data for each page from one or more material data. Then, by referring to the tag information of a job ticket, the image editor 46 performs an imposing process according to a designated binding process and a designated page folding process. After submission of the material data and the DTP process are completed, the image editor 46 temporarily records the edited data as proof data in the memory 44, in preparation for a next proofreading process.

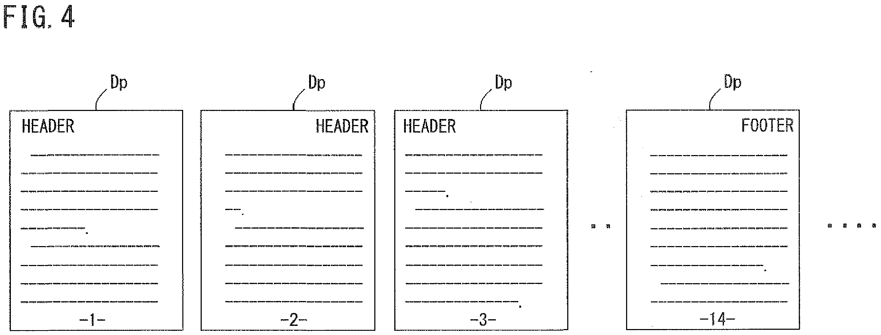

As a result, proof data made up of a plurality of pages (page data Dp) are obtained as shown in FIG. 4. The page regions of the respective page data Dp have the same size. A page region having a size in common with a plurality of pages may hereinafter also be referred to as a common page region Rp.

Then, in steps S2 through S4, the operator proofread each of the pages, while at the same time, proof images of the respective pages represented by the proof data are displayed on the display unit 28. For confirming whether or not the titles of the chapters are correct, for example, the operator may call up a consolidated display mode in steps S3 and S4. Operations of the image editing apparatus 20 in the consolidated display process of step S4 will be described later.

Then, in step S5, the operator confirms whether or not there is an area to be corrected in the proof data. If there is an area to be corrected in the proof data, then in step S6, the operator corrects the proof data at the present time. The operator repeats the proofreading process in steps S2 through S6.

In step S7, if necessary, the operator produces a proof print 24 on the proof press 22. If a proof print 24 is produced, then the operator can strictly confirm whether or not there is an area to be corrected by visually checking the proof print 24.

More specifically, in response to a printing command, the RIP processor 48 (see FIG. 2) converts the format of the proof data acquired from the memory 44 from the PDL format into a raster format. The proof press 22 then acquires the raster-format proof data via the printing I/F 42, and prints an image on a medium (not shown) based on the raster-format proof data, thereby producing a proof print 24. At this time, the proof press 22 may adjust colors of the proof print 24 according to a known color matching technique in order to reproduce the colors of the processed print FP at the printing site 14.

After having obtained proofread data in the proofreading process in steps S2 through S7, the operator uploads the proofread data into the database server 16, thereby saving the proofread data as a data file in step S8. Finally, in step S9, a print operator residing at the printing site 14 produces a processed print FP based on the proofread data, which is downloaded from the database server 16.

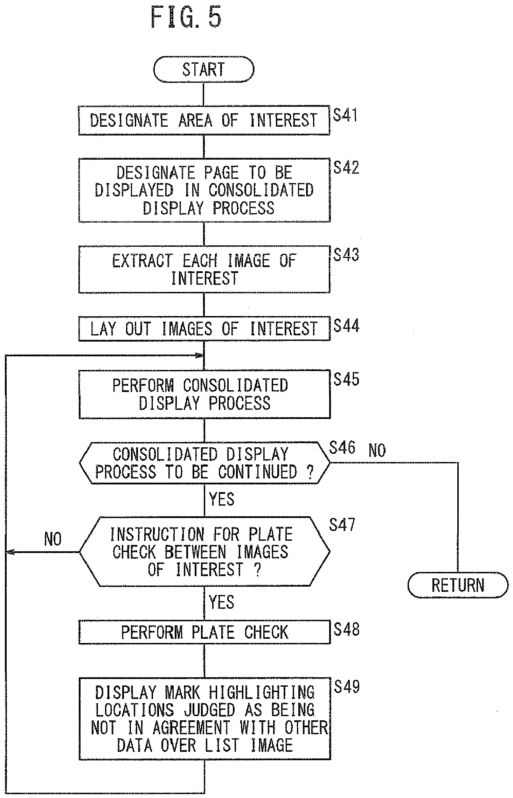

It is thus possible to produce a processed print FP by using the print producing system 10. Operations of the image editing apparatus 20 in the consolidated display process of step S4 (see FIG. 3) will be described in detail below with reference to FIGS. 5 through 10.

First, in step S41, the region-of-interest designator 54 designates an area of interest 112 from a common page region Rp.

FIG. 6 is a view showing a first image, which represents a setting example of the consolidated display process. As shown in FIG. 6, a window 100 includes a preview image 102 representing the common page region Rp on a left side of a two-page spread, a preview image 104 representing the common page region Rp on a right side of the two-page spread, and a button 106 designated by "NEXT." In the setting example shown in FIG. 6, the page data Dp of a first page (or a second page) are visibly displayed as the preview image 102 (or the preview image 104).

For example, with an arrow-shaped cursor 108 being placed at a given position in the common page region Rp on the left side in the window 100, the mouse 34 is dragged so as to display a dotted-line rectangular frame 110L over the preview image 102. The region surrounded by the rectangular frame 110L corresponds to an area of interest 112, which is to be displayed in the consolidated display process.

In response to display of the rectangular frame 110L over the preview image 102, a rectangular frame 110R also is displayed in a corresponding position over the preview image 104. The region surrounded by the rectangular frame 110R corresponds to an area of interest 112, which is to be displayed in the consolidated display process. Since the window 100 simulates a two-page spread, the rectangular frames 110L, 110R are horizontally symmetric with respect to a vertical central axis A of the window 100.

If the button 106 designated by "NEXT" is clicked on, the display controller 40 changes the first image of the window 100 into a second image, as shown in FIG. 7.

Then, in step S42, the page designator 56 designates a page to be displayed in the consolidated display process.

FIG. 7 is a view showing a second image, which represents a setting example of the consolidated display process. As shown in FIG. 7, the window 100 includes a first input section 122 for designating consolidated display modes, a second input section 124 for designating page numbers to be displayed, a third input section 126 for limiting the page numbers designated by the second input section 124 to even numbers and/or odd numbers, and a button 128 designated by "SET."

The first input section 122 enters a mode attribute of one of "LIST MODE" and "CLASSIFY MODE" in response to clicking of a radio button 130a or 130b. In the setting example shown in FIG. 7, the first input section 122 enters "LIST MODE" as the mode attribute.

The second input section 124 enters pages to be displayed, i.e., all pages or a specific range of page numbers, in response to clicking of a corresponding radio button. For designating a range of page numbers, the operator designates "pages 1 through 30 and pages 80 through 100," for example.

The third input section 126 enters pages to be displayed, i.e., odd-numbered pages and/or even-numbered pages, in response to clicking of a corresponding radio button. In the setting example shown in FIG. 7, both odd-numbered pages and even-numbered pages are designated. Since the pages to be displayed in the consolidated display process can freely be designated, the operator is able to perform the proofreading process smoothly.

If the button 128 designated by "SET" is clicked on, the main unit 26 acquires consolidated display information entered from the consolidated display information input unit 66, and supplies the acquired consolidated display information to the display data generator 52. The consolidated display information represents in detail the position and size of the area of interest 112 (see the window 100 in FIG. 6) as well as the mode attribute and page numbers (see the window 100 in FIG. 7).

Then, in step S43, the image-of-interest extractor 58 extracts images of interest 146 from the common page regions Rp (i.e., image regions represented by the page data Dp) of the pages designated in step S42.

Then, in step S44, the list image generator 60 lays out the images of interest 146 extracted in step S43 to thereby generate list images 142L, 142R, which make the images of interest 146 visible simultaneously. For better visibility, the size, display magnification, spacing, and layout of the images of interest 146 may be changed. For example, if the areas of interest 112 are rectangular in shape, then the list image generator 60 may generate list images 142L, 142R in which the images of interest 146 are arrayed along a direction aligned with the shorter side of the rectangular areas of interest 112. The list images 142L, 142R thus generated are suitable for the consolidated display process, as the list images 142L, 142R allow several images to be viewed simultaneously.

Then, in step S45, the display controller 40 displays the list images 142L, 142R generated in step S44 on the display unit 28.

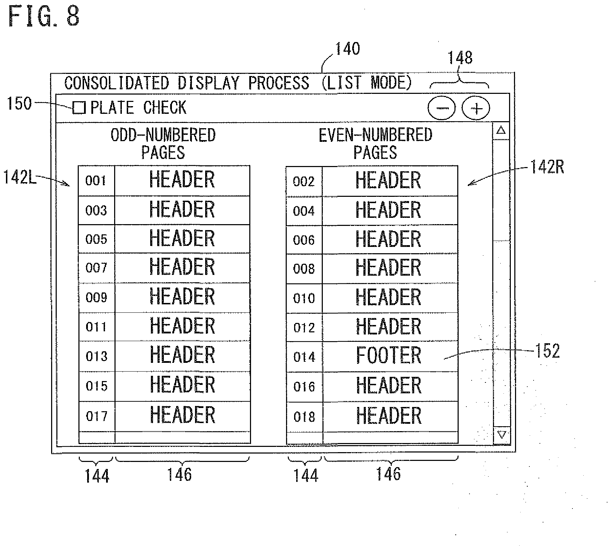

FIG. 8 is a view showing an example of images displayed in the consolidated display process.

As shown in FIG. 8, a window 140 includes a list image 142L made up of images of interest 146 on odd-numbered pages on the left side, and a list image 142R made up of images of interest 146 on even-numbered pages on the right side. Each of the list images 142L, 142R is made up of page numbers 144 defined by three-figure Arabic numerals, and images of interest 146 corresponding to the respective page numbers 144. More specifically, in the example shown in FIG. 8, the images of interest 146 on the respective pages are arrayed vertically in the window 140.

The operator then views the images of interest 146 successively downwardly or upwardly along the list images 142L, 142R in order to compare adjacent ones of the images of interest 146 with each other, thereby confirming whether or not the images of interest 146 are in agreement with each other as a whole on the list images 142L, 142R. Since the images of interest 146 can be confirmed as a whole throughout the designated pages, efficiency is much better than if two images were simply compared with each other page-by-page.

In this manner, the operator proofreads certain items concerning titles including a book title, captions, and chapters in the consolidated display process. In step S46, if plural areas to be processed exist within the consolidated display, then the area of interest 112 (see FIG. 6) is changed accordingly, and the processes of steps S41 through S46 are repeated. Further, for making the consolidated display process more convenient, various display functions may be added as follows.

The window 140 shown in FIG. 8 includes an icon 148 in an upper right corner thereof for changing the display magnification. If the icon 148 is clicked on, the display magnification of the list images 142L, 142R can be increased or reduced. The operator finds the icon 148 highly useful because the display size of the images of interest 146 can be scaled as desired if necessary.

The window 140 also includes a check box 150 for performing a plate check between images of interest 146 in an upper left corner thereof. The plate check refers to an electronic plate check for comparing electronic data in question. The electronic plate check allows the operator to easily grasp the agreement of images of interest 146 in question.

Then, in step S47, the consolidated display information input unit 66 monitors whether or not the check box 150 has been checked, in order to determine whether there is an instruction for a plate check between the images of interest 146. If the consolidated display information input unit 66 decides that the check box 150 has been checked, then in step S48, the plate check processor 50 carries out a plate check between the images of interest 146. More specifically, the plate check processor 50 determines agreement of data pixel-by-pixel, and calculates a page number and a disagreement region of an image of interest 146 the data of which are not in agreement with the other data. The plate check processor 50 may determine agreement of data according to any of various known image recognition processes. In the examples shown in FIGS. 4 and 8, page data Dp (two locations) on page 14 are judged as not being in agreement with the other data.

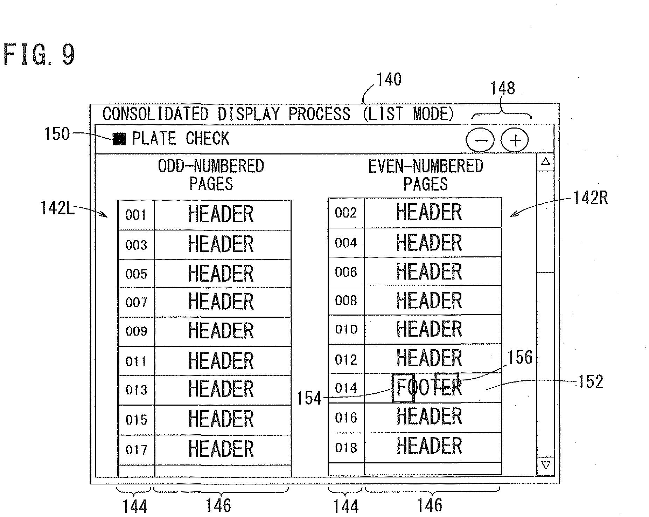

Then, in step S49, the display controller 40 displays marks 154, 156 (see FIG. 9) highlighting the locations that are judged in step S48 as not being in agreement with the other data over the list images 142L, 142R. More specifically, the highlighting mark generator 62 generates image data representing the marks 154, 156 based on the page number and disagreement region acquired from the plate check processor 50, and supplies the generated image data to the list image generator 60. The list image generator 60 combines the marks 154, 156 with the list image 142R, and supplies the combined image data to the display controller 40.

As shown in FIG. 9, the marks 154, 156 are displayed at two locations, which are not in agreement with other data over an image of interest 152 that belongs to the list image 142R. The operator recognizes the marks 154, 156 and hence discovers two typographical errors in the header region of page 14.

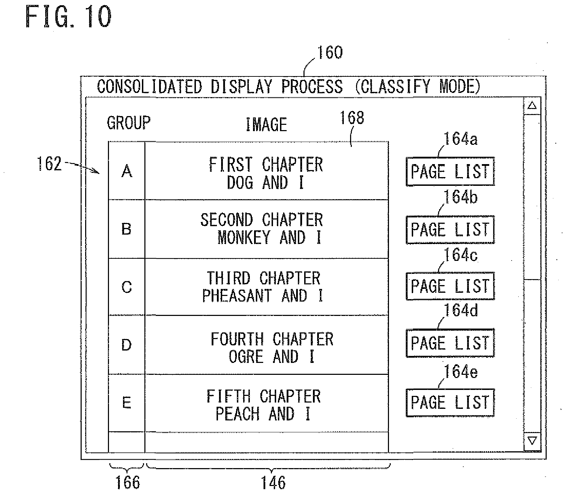

If the operator clicks the radio button 130b (see FIG. 7) to select "CLASSIFY MODE," the display unit 28 displays the window 160 shown in FIG. 10 instead of the window 140 shown in FIG. 9.

As shown in FIG. 10, the window 160 includes a list image 162 representing chapters classified into respective groups, and five buttons 164a through 164e each designated by "PAGE LIST." The list image 162 is made up of group numbers 166 represented by respective alphabetic letters A through E, and images of interest 146 corresponding to the respective group numbers 166.

For example, if the button 164a designated by "PAGE LIST" that corresponds to the image of interest 168 belonging to group A in FIG. 10, is clicked on, all page numbers associated with the image of interest 168 may be displayed. Therefore, if there are plural items of information within the same area of interest 112, then agreement between such data can be confirmed for each group.

The operator thus calls up a consolidated display mode (and an electronic plate check mode) as necessary, and performs the proofreading process in step S4. Since an image of interest 146 corresponding to a designated area of interest 112 is extracted from each of at least two pages, and list images 142L, 142R, 162 in which the images of interest 146 are arrayed in a given direction are generated, the operator can confirm whether or not the images of interest 146 are in agreement with each other as a whole on the list images 142L, 142R, 162. Therefore, efficiency is much better than if two images were simply compared with each other page-by-page.

The present invention is not limited to the above embodiment. Various changes and modifications may be made to the embodiment without departing from the scope of the invention.

For example, all of the page regions of the page data Dp of the processed print FP do not necessarily have to be identical to each other. In other words, the principles of the present invention also are applicable to a common page region Rp the size of which is common to at least two pages.

## Claims

1. A proofreading apparatus (20) for electronically proofreading proof data made up of a plurality of pages (Dp), comprising:
a region-of-interest designator (54) for designating an area of interest (112) from a page region (Rp) having a size in common with at least two pages (Dp);
an image-of-interest extractor (58) for extracting an image of interest (146, 152, 168) that corresponds to the area of interest (112) designated by the region-of-interest designator (54) from each of the at least two pages (Dp); and
a list image generator (60) for generating a list image (142L, 142R, 162) in which images of interest (146, 152, 168) extracted by the image-of-interest extractor (58) are arrayed along a predetermined direction.

2. The proofreading apparatus (20) according to claim 1, further comprising a page designator (56) for designating a plurality of pages (Dp) from which the image of interest (146, 152, 168) is extracted by the image-of-interest extractor (58).

3. The proofreading apparatus (20) according to claim 1, further comprising a plate check processor (50) for determining image agreement between the images of interest (146, 152).

4. The proofreading apparatus (20) according to claim 3, wherein the list image generator (60) generates a list image (142R) with a highlighted region, which is judged as not being in agreement with other images by the plate check processor (50).

5. The proofreading apparatus (20) according to claim 3, wherein the list image generator (60) generates a list image (162) with classified types of images of interest (168), which are judged as being in agreement with each of other images by the plate check processor (50).

6. The proofreading apparatus (20) according to claim 1, wherein the region-of-interest designator (54) designates a rectangular area of interest (112); and
the list image generator (60) generates a list image (142L, 142R, 162) in which images of interest (146, 152, 168) are arrayed along a direction aligned with a shorter side of the rectangular area of interest (112).

7. The proofreading apparatus (20) according to claim 1, further comprising a display unit (28) for displaying the list image (142L, 142R, 162) that is generated by the list image generator (60).

8. A proofreading method of electronically proofreading proof data made up of a plurality of pages (Dp), comprising the steps of:
designating an area of interest (112) from a page region (Rp) having a size in common with at least two pages (Dp);
extracting an image of interest (146, 152, 168) that corresponds to the designated area of interest (112) from each of the at least two pages (Dp); and
generating a list image (142L, 142R, 162) in which extracted images of interest (146, 152, 168) are arrayed along a predetermined direction.

9. A recording medium (44) storing therein a program for electronically proofreading proof data made up of a plurality of pages (Dp), the program enabling a computer to function as:
a region-of-interest designator (54) for designating an area of interest (112) from a page region (Rp) having a size in common with at least two pages (Dp);
an image-of-interest extractor (58) for extracting an image of interest (146, 152, 168) that corresponds to the area of interest (112) designated by the region-of-interest designator (54) from each of the at least two pages (Dp); and
a list image generator (60) for generating a list image (142L, 142R, 162) in which images of interest (146, 152, 168) extracted by the image-of-interest extractor (58) are arrayed along a predetermined direction.
